# EUROPEAN PATENT APPLICATION

(11) **EP 1 380 625 A1**
(43) Date of publication of application: **14.01.2004**
(21) Application number: 02701685.6
(22) Date of filing: 01.03.2002
(51) Int. Cl.: C09J 163/00, C09J 183/10

(54) **AUTOMOTIVE ADHESIVE**

(30) Priority: 08.03.2001 JP 2001065524
(71) Applicant: KONISHI CO., LTD., Osaka-shi, Osaka-fu 541-0045 (JP); Ishizaki Honten Co., Ltd., Hiroshima-shi, Hiroshima 736-0084 (JP)
(72) Inventor: MAKINO, Masahiko, c/o KONISHI CO., LTD., Saitama-shi, Saitama 338-0832 (JP); KISHI, Nobuo, c/o KONISHI CO., LTD., Saitama-shi, Saitama 338-0832 (JP); KAWANO, Kiyozo, c/o ISHIZAKI HONTEN CO., LTD., Hiroshima-shi, Hiroshima 736-0084 (JP); UMESAKI, Shuji, c/o ISHIZAKI HONTEN CO., LTD., Hiroshima-shi, Hiroshima 736-0084 (JP)
(74) Representative: Schuster, Thomas, Dipl.-Phys.
(86) International application number: PCT/JP2002/001932
(87) International publication number: WO 2002/072724

(57) **Abstract**

Provided is an automobile adhesive comprising (a) an alkoxysilyl group-containing polymer, (b) a hardening catalyst for the above-mentioned alkoxysilyl group-containing polymer, (c) a vinyl-based polymer, (d) an epoxy resin, (e) an epoxy hardening agent, and (f) an inorganic filler, wherein the adhesive immediately after mixing all of the above-mentioned (a) to (f) has a viscosity at 23°C of 100 to 700 Pa • s and a structural viscosity index of 2.0 to 4.0.

## Description

### BACKGROUND OF THE INVENTION

### 1. Field of the Invention

The present invention relates to an adhesive for adhering members for automobiles. More specifically, the present invention relates to an automobile adhesive which is capable of quickly showing primary hardening with moisture in the air, then, manifesting strong permanent adhesive strength by undergoing a hardening reaction of an epoxy resin, and the like.

### 2. Background Art

Automobile glass adhesives are used for fitting members such as a bracket for mounting inner mirror, mole, protector, positioning reference pin, hinge, bracket for mounting sensor, and the like, to an automobile glass . When a bracket for mounting an inner mirror is adhered to a front glass, this contact areais not only exposed to direct sunlight, condensation and vibration but also receives force in each motion of the inner mirror by a driver.

For this reason, automobile glass adhesives are required to have various properties such as vibration resistance, durability, weather resistance, impact resistance, water resistance and heat resistance, in addition to strong adhesive strength to glass. As such automobile glass adhesives, epoxy-based adhesives, urethane-based adhesives, silicone-based adhesives and modifiedsilicone-based adhesives are generally used.

In a process of fitting a bracket to a front glass, first, a glass is placed approximately horizontally and a bracket is fitted to the glass, then, the glass is raised vertically and carried to the next process under this condition, in some cases.

Also, a metal bracket has a weight of dozens grams. If this bracket is not adhered quickly to a glass, the bracket is displaced lower from an original position when the glass is raised vertically. It leads to defective goods.

However, epoxy resin-based adhesives, for example, need longer time for hardening of the adhesive. Therefore, in case that a glass is raised vertically, we should wait for dozens minutes until the displacement of a bracket stops. It causes a problem of poor production efficiency. Even if an epoxy resin-based adhesive of quick hardening type is used, vibration resistance, impact resistance and the like are insufficient.

When a hot melt adhesive or sticky tape is used, a temporal tacking action is manifested and displacement does not occur. However, it cannot obtain adhesive strength which is excellent in various properties such as vibration resistance, durability, weather resistance, impact resistance,water resistance and heat resistance.

Further, concerning to a urethane-based adhesive relatively excellent in an adhesive property between glass and metal, oxygen dioxide is generated by a reaction of moisture in the air with an isocyanate group contained in a urethane-resin during a hardening reaction. Therefore, there is another problem that bubbles are mixed in an adhesive layer and lowering adhesive strength.

### SUMMARY OF THE INVENTION

An object of the present invention is to provide an automobile adhesive hardening to manifest a temporal tacking action quickly after adhesion and finally to adhere strongly to give excellent. properties such as durability, weather resistance, heat resistance, impact resistance and water resistance, for solving the above-mentioned various problems.

Namely, the present invention can be used not only for adhesion of an automobile glass with other members but also for mutual adhesion of members made of materials other than glass. The subject of the invention of the instant application is an automobile adhesive for adhering members, which is required to harden quickly after adhesion to give finally strong adhesion.

The automobile adhesion of the present invention is an adhesive comprising
(a) an alkoxysilyl group-containing polymer,
(b) a hardening catalyst for the alkoxysilyl group-containing polymer,
(c) a vinyl-based polymer,
(d) an epoxy resin,
(e) an epoxy hardening agent, and
(f) an inorganic filler,
wherein the adhesive immediately after mixing all of the above-mentioned (a) to (f) has a viscosity at 23°C of 100 to 700 Pa · s and a structural viscosity index of 2.0 to 4.0.

The present invention is designed so that the rheology property of an adhesive before hardening shows specific viscosity and structural viscosity index. In the present invention, an alkoxysilyl group-containing polymer in the adhesive causes a hydrolysis polycondensation reaction quickly by moisture in the air and moisture contained in an inorganic filler. According to this, after an adhesive layer is formed between two materials to be fitted, primary hardening progresses in about several minutes, and an excellent temporal tacking property which does not flow the adhesive layerin case that a member is raised vertically, can be imparted. Further, in the adhesive of the present invention, a hardening reaction of an epoxy resin also progresses sequentially. Therefore, the adhesive adheres strongly, and finally, the hardened layer is also excellent in various properties. Methods of measuring viscosity and structural viscosity index will be described later.

It is preferable that the alkoxysilyl group-containing polymer (a) has its main chain substantially of polyoxyalkylene structure, and contains one or more selected from the group consisting of a dialkylmonoalkoxysilyl group, monoalkyldialkoxysilyl group and trialkoxysilyl group, as the alkoxysilyl group. Particularly, the polymer (a) preferably contains a monomethyldimethoxysilyl group and trimethoxysilyl group, and by this, its hardening reaction can be progressed quickly by moisture in the air.

The present disclosure relates to subject matter contained in Japanese Patent Application No. 2001-065524, filed on March 8 , 2001, the disclosure of which is expressly incorporated herein by reference in its entirety.

### DETAILED DESCRIPTION OF PREFERRED EMBODIMENTS

When a member such as a metal bracket is fitted to a front glass of an automobile, the bracket is adhered via adhesives to the glass which is horizontally placed, and then they are vertically placed. Considering to this, the present inventors have found that the adhesive is required to have two natures. The two natures are: a nature of quickly hardening, after adhesion of a pasting member to a glass, to manifest a temporal tacking action, that is , a temporal tacking property; and a nature of finally adhering strongly, that is, high adhesion stability. As a result of intensive study in view of them, a temporal tacking property and high adhesion stability could be obtained simultaneously by utilizing two kinds of hardening systems.

Of the two kinds of hardening systems, in order to manifest a temporal tacking property, an action of hydrolysis polycondensation of an alkoxysilyl group by moisture in the air and moisture contained in an inorganic filler is utilized.

According to this, the automobile adhesive of the present invention contains an alkoxysilyl group-containing polymer (a) as an essential component. If the presence of polymer (a) is contained in the adhesive, a hardened adhesive layer has certain degree of elasticity after completion of hardening of an epoxy resin (d) , therefore, durability against vibration and impact becomes very excellent.

It is necessary that this alkoxysilyl group-containing polymer (a) contains one or more alkoxysilyl groups in one molecule. Preferably, it contains at least alkoxysilyl groups in view of reactivity, and in this case, a temporal tacking property can be imparted more quickly to an adhesive layer. It may contain three or four alkoxysilyl groups when the number of the alkoxysilyl group is over 5 , however, storage stability decreases and the vibration resistance of an adhesion hardened layer lacks, in some cases. Preferably, it contains two to four alkoxysilyl groups.

The alkoxysilyl group-containing polymer (a) can be used without particularly limitation providing that s a polymer contains an alkoxysilyl group. The preferable main chain structure of the alkoxysilyl group-containing polymer (a) is a polyoxyalkylene structure represented by -(R-O)ₙ-. R represents an alkylene group and examples thereof include, but not limited to, an ethylene group, propylene group, isobutylene group and tetramethylene group. In one molecule , two or more of these alkylene groups may be present.

The molecular weight of the polymer (a) is preferably about 500 to 30000 from the standpoints of reactivity and hardened physical properties after reaction. More preferable Mn is 2000 to 20000 in view of hardening speed and vibration resistance owing to suitable elasticity of an adhesion hardened layer.

It is preferable that the alkoxysilyl group of the polymer (a) has any one or more of a dialkylmonoalkoxysilyl group, monoalkyldialkoxysilyl group and trialkoxysilyl group. Examples of the alkoxy include, but not limited to, methoxy, ethoxy, propoxy and the like. The most preferable alkoxysilyl group-containing polymer (a) contains both of a monomethyldimethoxysilyl group and a trimethoxysilyl group, and shows quick progress of a hardening reaction by humidity in the air, and can complete temporal tacking in about 3 minutes.

Of course, the alkoxysilyl group-containing polymer (a) may be a mixture of various polymers (a) having an alkoxysilyl group. As examples thereof, mixture of a silicone polymer having a monomethyldimethoxysilyl group and a silicone polymer having a trimethoxysilyl group is exemplified. This mixture can be preferably used as well as the alkoxysilyl group-containing polymer (a) containing both of a monomethyldimethoxysilyl group and a trimethoxysilyl group.

The weight ratio of a monomethyldimethoxysilyl group to a trimethoxysilyl group in the alkoxysilyl group-containing polymer (a) is preferably about 1 to 90:99 to 10.

The polymer having a polyoxyalkylene structure as the main chain structure and an alkoxysilyl group can be obtained by the following procedure. Preferably, the method is that an alkylene oxide such as ethylene oxide and propylene oxide is allowed to react with polyols, for example, diols such as ethylene glycol and propylene glycol; triols such as glycerin and hexanetriol; tetraols such as pentaerythritol and diglycerin; sorbitol under known conditions, to obtain a polyoxyalkylene polymer before introduction of an alkoxysilyl group. The polyoxyalkylene polymer is preferably a 2 to 6-valent polyoxypropylene polyol, particularly, polyoxypropylenediol, polyoxypropylenetriol in view of the water resistance and physical properties of an adhesion hardened substance.

For an example of introducing an alkoxysilyl group into a polyoxyalkylene polymer, there is a first method in which an unsaturated double bond is introduced into an end hydroxyl group of a polyoxyalkylene polymer, then, a hydrosilyl compound of the general formula HSi(OR¹)₂(R²) and/or HSi(OR¹)₃ (wherein, R¹ may be the same or different, and represents a hydrogen atom or an alkyl group having 1 to 5 carbon atoms. R² represents an alkyl group having 1 to 10 carbon atoms or an aryl group having 6 to 20 carbon atoms.) is reacted.

In order tointroduce an unsaturated double bond, there is a method in which a compound having a functional group having reactivity with an unsaturated double bond and hydroxyl group is reacted with a hydroxyl group of a polyoxyalkylene polymer to give a bond such as an ether bond, ester bond and urethane bond or carbonate bond. It may also be permissible that, in order to polymerize an oxyalkylene, an allyl group-containing epoxy compound such as an allyl glycidyl ether is added and copolymerized, to introduce a double bond into a side chain of a polyoxyalkylene polymer.

When the above-mentioned hydrosilyl compound is reacted with the introduced unsaturated double bond, an alkoxysilyl group-containing polymer (a) having an introduced alkoxysilyl group is obtained. It is recommended to use a platinum-based, rhodium-based, cobalt-based, palladium-based or nickel-based catalyst, in reaction of a hydrosilyl compound. Among them, platinum-based catalysts such as chloroplatinic acid, platinum metal, platinum chloride and platinum olefin complex are preferable. It is preferable to conduct the reaction of a hydrosilyl compound for several hours at 30 to 150°C from the standpoint of reactivity of an unsaturated double bond and a hydroxyl compound, and particularly at 60 to 120°C from the standpoints of reaction speed and reaction ratio of an unsaturated double bond and hydroxyl compound.

A second method of introducing an alkoxysilyl group into a polyoxyalkylene polymer is that an isocyanatesilyl compound of the general formula:

R²-Si(OR¹)₂(R³NCO)

and/or

(R³NCO)Si(OR¹)₃

(wherein, R¹ and R² have the same meanings as described before. R³ represents a divalent hydrocarbon group having 1 to 17 carbon atoms) is reacted with a hydroxyl group in a polyoxyalkylene polymer. In this reaction, a known urethanation catalyst may be used. Usually, an alkoxysilyl group-containing polymer (a) can be obtained by reaction for several hours, at 20 to 200°C from the standpoint of reactivity of a hydroxyl compound and an isocyanate compound, particularly at 50 to 150°C in view of reaction speed and reaction ratio of a hydroxyl group and an isocyanate group.

A third method of introducing an alkoxysilyl group into a polyoxyalkylene polymer is that a method in which a polyisocyanate compound such as tolylene diisocyanate is reacted with a hydroxyl group of a polyoxyalkylene polymer to introduce an isocyanate group, and then, react with a compound of the general formula:

R²-Si(OR¹)₂(R³W)

and/or

(R³W)Si(OR¹)₃

(wherein, R¹, R² and R³ have the same meanings as described before. W represents an active hydrogen group selected from a hydroxyl group , carboxyl group , mercapto group, primary amino group and secondary amino group. ). By reaction of W with an isocyanate group, an alkoxysilyl group-containing polymer (a) can be obtained.

Examples of the polyisocyanate compound include, but not limited to, aliphatic, alicyclic, aromatic aliphatic and aromatic diisocyanate compounds. Specific examples thereof will be mentioned below.

Aliphatic diisocyanate compounds: trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanate methylcaproate and the like.

Alicyclic diisocyanate compounds: 1,3-cyclopentene diisocyanate, 1,4-cyclohexane diisocyanate, 1,3-cyclohexane diisocyanate, 3-isocyanatemethyl-3,5,5-trimethylcyclohexyl isocyanate, 4,4'-methylenebis(cyclohexyl isocyanate), methyl-2,4-cyclohexane diisocyanate, methyl-2,6-cyclohexane diisocyanate, 1,3-bis(isocyanatemethyl)cyclohexane and 1,4-bis(isocyanatemethyl)cyclohexane, isophorone diisocyanate.

Aromatic aliphatic diisocyanate compounds: 1,3- or 1,4-xylylene diisocyanate or mixtures thereof , ω, ω '-diisocyanate-1,4-diethylbenzene, 1,3- or 1,4-bis(1-isocyanate-1-methylethyl)benzene or mixtures thereof.

Aromatic diisocyanate compounds : m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate and 4,4'-diphenyl ether diisocyanate.

Other diisocyanate compounds: diisocyanates containing a sulfur atom, such as phenyl diisothiocyanate.

Among the above-mentioned polyisocyanate compounds, 2,4-or 2.6-tolylene diisocyanate, 4,4' -diphenylmethane diisocyanate, hexamethylene diisocyanate, 1,3 - or 1,4-xylylene diisocyanate or mixtures thereof, isophorone diisocyanate, 1,3-bis(isocyanatemethyl)cyclohexane, 1,4-bis(isocyanatemethyl)cyclohexane and 4,4'-methylenebis (cyclohexyl isocyanate) are preferable. When an aliphatic diisocyanate compound is used, a resin showing little discoloration can be obtained.

Examples of the compound of the general formula:

R²-Si(OR¹)₂(R³W) and/or (R³W) Si(OR¹)₃ include, but not limited to, reaction products of aminosilane compounds with α, β-unsaturated carbonyl compounds or maleic diesters and reaction products of amine compounds with alkoxysilane compounds having an unsaturated double bond, and the like . These Michael addition reactions may be advantageously conducted at -20 to +150°C for 1 to 1000 hours.

Examples of the aminosilane compound include, but not limited to, γ-aminopropyltrimethoxysilane, γ-aminopropyltriethoxysilane, γ-aminopropylmethyldimethoxysilane, γ-aminopropylmethyldiethoxysilane, N-β(aminoethyl)-γ-aminopropyltrimethoxysilane, N-β(aminoethyl)-γ-aminopropyltriethoxysilane, N-β(aminoethyl)-γ-aminopropylmethyldimethoxysilane, N-β(aminoethyl)-γ-aminopropylmethyldiethoxysilane, other special aminosilanes, trade name: KBM 6063, X-12-896, KBM 576, X-12-565, X-12-580, X-12-5263, KBM 6123, X-12-575, X-12-562, X-12-5202, X-12-5204, KBE 9703 and the like, manufactured by Shin-Etsu Chemical Co., Ltd. Of the above-mentioned aminosilane compounds, preferable are γ-aminopropyltrimethoxysilane, γ-aminopropyltriethoxysilane, γ-aminopropylmethyldimethoxysilane, γ - aminopropylmethyldiethoxysilane, N-β(aminoethyl) γ - aminopropyltrimethoxysilane, N-β(aminoethyl)-γ-aminopropyltriethoxysilane and N-β(aminoethyl)-γ-aminopropylmethyldimethoxysilane, from the standpoints of reaction easiness, wide marketing and easy availability.

Examples of the α, β-unsaturated carbonyl compound include, but not limited to, (meth)acrylic compounds, vinylketone compounds, vinylaldehyde compounds, other compounds. Mentioned as the (meth)acrylic compound are methyl (meth)acrylate, ethyl (meth)acrylate, propyl (meth)acrylate, isopropyl (meth)acrylate, butyl (meth)acrylate, isobutyl (meth) acrylate, t-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, 2-ethylhexyl acrylate, nonyl (meth)acrylate, decyl (meth)acrylate, isodecyl (meth)acrylate, undecyl (meth) acrylate, dodecyl (meth) acrylate, lauryl (meth) acrylate, octadecyl (meth)acrylate, stearyl (meth)acrylate, tetrahydrofurfuryl (meth)acrylate, butoxyethyl (meth)acrylate, ethoxydiethyleneglycol(meth)acrylate, benzyl(meth)acrylate, cyclohexyl (meth)acrylate, phenoxyethyl (meth)acrylate, polyethylene glycol (meth)acrylate, polypropylene glycol (meth)acrylate, methoxyethylene glycol (meth)acrylate, ethoxyethylene glycol (meth)acrylate, methoxypolyethylene glycol (meth)acrylate, dicyclopentadienyl (meth)acrylate, dicyclopentanyl (meth)acrylate, dicyclopentenyl (meth)acrylate, tricyclodecanyl (meth)acrylate, bornyl (meth)acrylate, isobornyl (meth)acrylate, diacetone (meth)acrylate, isobutoxymethyl (meth)acrylate, N-vinylpyrrolidone, N-vinylcaprolactam, N-vinylformaldehyde, N,N-dimethylacrylamide, t-octylacrylamide, dimethylaminoethyl (meth)acrylate, diethylaminoethyl (meth)acrylate, 7-amino-3,7-dimethyloctyl (meth)acrylate, N,N-dimethyl (meth)acrylamide, N,N'-dimethylaminopropyl (meth)acrylamide and acryloylmorpholine, other compounds, trade name : Aronics M-102, M-111, N-114 and M-117 manufactured by Toagosei Co., Ltd., Kayahard TC110S, R629 and R644 manufactured by Nippon Kayaku Co., Ltd., and Viscoat 3700 manufactured by Osaka Organic Chemistry Industry Ltd..

Further listed are polyfunctional compounds such as trimethylolpropane tri(meth)acrylate, pentaerythritol (meth)acrylate, pentaerythritol tetra(meth)acrylate, ethylene glycoldi(meth)acrylate, tetraethyleneglycoldi(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropane trioxyethyl (meth)acrylate, tris(2-hydroxyethyl) isocyanurate tri(meth)acrylate, tris(2-hydroxyethyl) isocyanurate di(meth)acryalte, tricyclodecanedimethanoldi(meth)acryalte, epoxy (meth)acrylate obtained by adding a (meth)acrylate to a glycidyl ether of bisphenol A, and the like, and commercially available products of the above-mentioned polyfunctional compounds, trade name: Upimer UV, SA 1002 and SA 2007, manufactured by Mitsubishi Chemical Co., Ltd., trade name: Viscoat 700, manufactured by Osaka Organic Chemistry Industry Ltd., trade name: Kayahard R604, DPCA-20, DPCA-30, DPCA-60, DPCA-120 , HX-620, D-310 and D-330, manuf actured by Nippon Kayaku Co., Ltd., trade name: Aronics M-210, M-215, M-315 and M-325, manufactured by Toagosei Co., Ltd., and the like.

In addition to the above-mentioned compounds, γ-methacryloxypropyl trimethoxysilane, γ-methacryloxypropyl triethoxysilane, γ-methacryloxymethyl dimethoxysilane, γ-methacryloxymethyl diethoxysilane, γ-acryloxypropyl trimethoxysilane and γ-acryloxymethyl dimethoxysilane having an alkoxysilyl group are exemplified.

As the vinylketone compound, vinyl acetone, vinyl ethyl ketone and vinyl butyl ketone are exemplified. As the vinylaldehyde compound, acrolein, methacrolein and crotonealdehyde are exemplified. As the other compound, maleic anhydride, itaconic anhydride, itaconic acid, crotonic acid, N-methylolacrylamide, diacetoneacrylamide, N-[3-(dimethylamino)propyl]methacrylamide, N,N-dimethylacrylamide, N,N-diethylacrylamide, N-t-octylacrylamide and N-isopropylacrylamide are exemplified.

In addition to the above-mentioned compounds, compounds containing a fluorine atom, sulfur atom or phosphorus atom inside are also contained. As the compound containing a fluorine atom, perfluorooctylethyl (meth)acrylate, trifluoroethyl (meth)acrylate and the like are listed, and as the compound containing a phosphorus atom, (meth)acryloxyethylphenyl acid phosphate and the like are listed.

Among the above-mentioned α, β-unsaturated carbonyl compounds, methyl acrylate, ethyl acrylate, propyl acrylate, butyl acrylate, t-butyl acrylate, octyl acrylate, 2-ethylhexyl acrylate and lauryl acrylate are preferable , from the standpoints of reaction easiness, wide marketing and easy availability. Among them, methyl acrylate and ethyl acrylate are particularly preferable for imparting a quick hardening property, and 2-ethylhexyl acrylate and lauryl acrylate are particularly preferable for imparting flexibility, α, β-unsaturated carbonyl compounds can be used singly or in combination of two or more.

Examples of the maleic diester include, but not limited to, dimethyl maleate, diethyl maleate, dibutyl maleate, di-2-ethylhexyl maleate and dioctyl maleate, and these can be used singly or in combination of two or more. Among them, dimethyl maleate, diethyl maleate, dibutyl maleate and di-2-ethylhexyl maleate are preferable; from the standpoints of reaction easiness, wide marketing and easy availability. Maleic diesters can be used singly or in combination of two or more.

The amine compound includes, for example, compounds having only one or more primary amino groups in its molecule, compounds having one or more primary amino groups and secondary amino groups in its molecule , and compounds having only one or more secondary amino groups in its molecule.

Examples of the compound having only one or more primary amino groups in its molecule include, but not limited to: mono primary amine compounds such as propylamine, butylamine, isobutylamine, 2-butylamine, 1,2-dimethylpropylamine, hexylamine, 2-ethylhexylamine, amylamine, 3-pentylamine, isoamylamine, 2-octylamine, 3-methoxypropylamine, 3-propoxypropylamine, 3-butoxypropylamine, 3-isobutoxypropylamine and rosin amine;and compounds having a plurality of primary amino groups such as N-methyl-3,3'-iminobis(propylamine), ethylenediamine, diethylenetriamine , triethylenediamine, pentaethylenediamine, 1,4-diaminobutane, 1,2-diaminopropane, ATU (3,9-bis (3-aminopropyl)-2,4,8,10-tetraoxaspiro [5,5] undecane ), CTU guanamine, dodecanoic dihydrazide, hexamethylenediamine, m-xylylenediamine, dianisidine, 4,4'-diamino-3,3'-diethyldiphenymethane, diamino diphenyl ether, 3,3',-dimethyl-4,4'-diaminodiphenylmethane, tridine base, m-toluilenediamine, o-phenylenediamine, m-phenylenediamine, p-phenylenediamine and melamine.

Examples of the compound having one or more primary amino groups and secondary amino groups in its molecule include, but not limited to, methylaminopropylamine, ethylaminopropylamine, ethylaminoethylamine, laurylaminopropylamine, 2-hydroxyethylaminopropylamine, 1-(2-aminoethyl)piperazine and N-aminopropylpiperazine.

Examples of the compound having only one or more secondary amino groups in its molecule include, but not limited to, piperazine, cis-2,6-dimethylpiperazine, cis-2,5-dimethylpiperazine, 2-methylpiperazine, N,N'-di-t-butylethylenediamine, 2-aminomethylpiperizine, 4-aminomethylpiperizine, 1,3-di-(4-piperidyl)-propane, 4-aminopropylaniline, 3-aminopyrrolidine and homopiperazine. The amino compounds can be used singly or in combination of two or more.

Examples of the alkoxysilane compound having an unsaturated double bond include, but not limited to, γ-methacryloxypropyltrimethoxysilane, γ-methacryloxypropyltriethoxysilane, γ-methacryloxymethyldimethoxysilane, γ-methacryloxymethyldiethoxysilane, γ-acryloxypropyltrimethoxysilane and γ-acryloxymethyldimethoxysilane, and other compounds, trade name: KBM 503P, manufactured by Shin-Etsu Chemical Co., Ltd., and the like. The alkoxysilane compounds having an unsaturated double bond can be used singly or in combination of two or more.

Known urethanation catalysts may be used in the reaction of introducing an isocyanate group into a polyol compound in the third method, and in the reaction of the introduced isocyanate group with a compound of the general formula: R²-Si(OR¹)₂(R³W) and/or (R³W) Si(OR¹)₃. Usually, an alkoxysilyl group-containing polymer (a) can be obtained by reaction for several hours at 20 to 200°C from the standpoint of reactivity, and particularly at 50 to 150°C in view of reaction speed and reaction ratio of an active hydrogen group with an isocyanate group.

In the fourth method, a polyol compound may be reacted with a compound obtained by reacting a compound having a secondary amino group in the molecule with a diisocyanate compound.

Examples of the alkoxysilane compound having a secondary amino group in the molecule include, but not limited to, reaction products of aminosilane compounds with α, β-unsaturated carbonyl compounds or maleic diesters, reaction products of amine compounds with alkoxysilane compounds having an unsaturated double bond. These Michael addition reactions may be advantageously conducted at -20 to +150°C for 1 to 1000 hours.

Known urethanation catalysts may be used in the reaction of an alkoxysilane compound having a secondary amino group in the molecule with a polyisocyanate compound according to the forth method, and in the reaction of its reaction product with a polyol compound. Usually, an alkoxysilyl group-containing polymer (a) can be obtained by reaction for several hours at 20 to 200°C from the standpoint of reactivity, and particularly at 50 to 150°C in view of reaction speed and reaction ratio of an active hydrogen group with an isocyanate group.

In the fifth method, it may also be permissible that, after introducing an unsaturated double bond into an end of a polyoxyalkylene polymer in the same manner as in the first method, a compound in which W represents a mercapto group in the above-mentioned third method is reacted. As such a compound, 3-mercaptopropyldimethoxysilane, 3-mercaptopropyltriethoxysilane and 3-mercaptopropyltriethoxysilane are exemplified. In the reaction, apolymerization initiator such as a radical generating agent and the like may be used, and in some cases, the reaction may be conducted by radiation or heat without using a polymerization initiator.

As the polymerization initiator, peroxide-based, azo-based and redox-based polymerization initiators and metal compound catalysts can be used. And as the peroxide-based and azo-based polymerization initiator, polymerization initiators having a reactive silicon functional group can also be used. Specific examples thereof include benzoyl peroxide, tert-alkyl peroxy ester, acetyl peroxide, diisopropyl peroxy carbonate, 2,2'-azobis (2-isobutyronitrile), 2,2'-azobis(2-methylbutyronitrile), 2,2'-azobis(2-methyl-4-trimethoxysilylpentonitrile) and 2,2'-azobis (2-methyl-4-methyldimethoxysilylpentonitrile). It is preferable to conduct this fifth reaction for several to dozens hours, at 20 to 200°C from the standpoint of reactivity of an unsaturated double bond with a mercapto group, and particularly at 50 to 150°C from the standpoints of reaction speed and reaction ratio of an unsaturated double bond and mercapto group.

As the polymer (a) having a polyoxyalkylene structure as the main chain structure and having an alkoxysilyl group, commercially available modified silicone polymers may be used. For example, trade name "Silyl SAT200" (manufactured by Kaneka Corp.) having a monomethyldimethoxysilyl group in the end structure is available.

The adhesive of the present invention includes a hardening catalyst for alkoxysilyl group-containing polymer (b). This hardening catalyst (b) plays a role in promoting a hydrolysis polycondensation reaction of an alkoxysilyl group. This reaction progresses only with moisture in the air, however, use of an organotin compound, metal complex, basic compound, organophosphorus compound and the like as the hardening catalyst (b) is recommended to accelerate the reaction. The use amount of the hardening catalyst (b) is preferably from 0.01 to 10 parts by weight based on 100 parts by weight of an alkoxysilyl group-containing polymer (a) in an automobile adhesive.

Examples of the organotin compound include, but not limited to, dibutyltin dilaurate, dibutyltin dimaleate, dibutyltin phthalate, octylic primary tin, dibutyltin methoxide, dibutyltin diacetylacetate, dibutyltin diversatate, dibutyltin oxide, and a reaction product of dibutyltin oxide and phthalic diester.

Examples of the metal complex include, but not limited to, titanate compounds such as tetrabutyl titanate, tetraisopropyl titanate and triethanolamine titanate; metal salts of carboxylic acids such as lead octylate, lead naphthenate, nickel naphthenate, cobalt naphthenate, bismuth octylate and bismuth versatate; metal acetylacetonate complexes such as an aluminum acetylacetonate complex and vanadium acetylacetonate complex.

Examples of the basic compound include, but not limited to, aminosilanes such as γ-aminopropyltrimethoxysilane and γ-aminopropyltriethoxysilane; quaternary ammonium salts such as tetramethylammonium chloride and benzalkonium chloride; "DABCO (trademark) series and "DABCO BL ( trade mark) series'' manufactured by Sankyo Air Products; linear or cyclic tertiary and quaternary ammonium salts containing a plurality of nitrogens such as 1,8-diazabicyclo [5.4.0] undec-7-ene.

Examples of the organophosphorus compound include, but not limited to, monomethylphosphoric acid, di-n-butyl phosphoric acid and triphenyl phosphate.

The adhesive of the present invention inculudes a vinyl-based polymer (c) as the essential component. This vinyl-based polymer (c) promotes a hydrolysis polycondensation reaction of an alkoxysilyl group.

Examples of the monomer forming a vinyl-based polymer (c) include , but not limited to , (meth) acrylic acid; (meth) acrylates which are alkyl esters having 1 to 20 carbon atoms such as methyl (meth)acrylate, ethyl(meth)acrylate, n-propyl(meth)acrylate, isopropyl (meth)acrylate, n-butyl (meth)acrylate, isobutyl (meth)acrylate, sec-butyl (meth)acrylate, tert-butyl (meth)acrylate, n-hexyl (meth)acrylate, 2-ethylhexyl (meth)acryalte, dodecyl (meth)acrylate, tetradecyl (meth)acrylate, hexadecyl (meth)acrylate and octadecyl (meth)acrylate; (meth)acrylates such as cyclohexyl (meth) acrylate, benzyl (meth)acrylate, phenyl (meth) acrylate, isobonyl (meth)acrylate, dimethylaminoethyl (meth)acrylate, tert-butylaminoethyl (meth)acrylate, glycidyl (meth) acrylate, tetrahydrofuran (meth)acrylate, allyl (meth)acrylate, 2-hydroxyethyl (meth)acrylate, hydroxypropyl (meth)acrylate, 2-hydroxy-3-phenoxypropyl (meth)acrylate, trimethylolpropane tri(meth)acrylate, trifluoroethyl (meth)acrylate, trade name "M-110" and "M-111" manufactured by Toagosei Co., Ltd. , trade name : "Veoba 9" and "Veoba 10" manufactured by Shell Chemical K.K.; acrylonitrile, α-methylacrylonitrile; 2-(meth)acryloyloxyethyl succinate, 2-(meth)acryloyloxyethyl maleate, 2-(meth)acryloyloxyethyl phthalate, 2-(meth)acryloyloxyethyl hexahydrophthalate; (meth)acrylamide; acrylic monomers such as (meth)acryl glycidyl ether; styrene-based monomers such as styrene, vinyltoluene, diviziylbenzene, α-methylstyrene, o-methylstyrene, m-methylstyrene, p-methylstyrene, p-ethylstyrene and p-methoxystyrene; vinyl group-containing monomers such as vinyl chloride, vinyl acetate, vinyl propionate, vinylpyrrolidone, vinylcarbazole, vinyl ether and vinyl glycidyl ether, allyl group-containing monomers such as allyl glycidyl ether; 2,4-dicyanobutene-1, butadiene, isoprene, chloroprene, other olefins or halogenated olefins; unsaturated esters , and these can be used singly or in combination of two or more.

From the standpoint of improvement in the vibration resistance and heat resistance of an adhesive layer, it is preferable to select a monomer so that the resulting homopolymer has a glass transition temperature Tg of 0 to 200°C. Examples of such a monomer include, but not limited to, methyl methacrylate, ethyl methacrylate, n-propyl methacrylate, isopropyl methacrylate, n-butyl methacrylate, isobutyl methacrylate, sec-butyl methacrylate; tert-butyl methacrylate, n-hexadecyl methacrylate, n-octadecyl methacrylate, cyclohexyl (meth)acrylate, benzyl (meth)acrylate; phenyl (meth)acrylate, isobonyl (meth)acrylate, dimethylaminoethyl (meth)acrylate, tert-butylaminoethyl (meth)acrylate, glycidyl methacrylate, tetrahydrofuran (meth)acrylate, allyl methacrylate, 2-hydroxyethyl methacrylate, hydroxypropyl methacrylate, 2-hydroxy-3-phenoxypropyl (meth)acrylate, trimethylolpropane tri(meth)acrylate, trifluoroethyl (meth)acrylate, trade name "M-110" and ''M-111'' manufactured by Toagosei Co. , Ltd. , trade name: Veoba 9" and "Veoba 10" manufactured by Shell Chemical K.K., trifluoroethyl methacrylate, acrylonitrile, 2-methacryloyloxyethyl succinate, 2-methacryloyloxyethyl maleate, 2-methacryloyloxyethyl phthalate, 2-methacryloyloxyethyl hexahydrophthalate, styrene, α-methylstyrene, o-methylstyrene, m-methylstyrene, p-methylstyrene, p-ethylstyrene, p-methoxystyrene, vinyl chloride, vinylpyrrolidone and vinylcarbazole. Among them, one or more monomers having C₁₋₂₀ selected from (meth)acrylate, glycidyl methacrylate, acrylonitrile and styrene are preferable in view of the vibration resistance and heat resistance of an adhesive layer. It is more preferable to use two or more of them in combination in view of control of Tg and physical properties. Copolymers of (meth)acrylate having C₁₋₈ and (meth)acrylate C₁₂₋₂₀ is particularly preferable. Here, the vibration resistance means a property of relaxing and absorbing impact caused by vibration during driving an automobile on an automobile mirror fitting area to a front glass, and adhesion stability thereof.

An alkoxysilyl group-containing monomer also can be used to symthesize a vinyl-based polymer (C). Examples of such a monomer include, but not limited to, vinylmethyldimethoxysilane, vinylmethyldiethoxysilane, vinyltrimethoxysilane, tris(2-methoxyethoxy)vinylsilane, 3-(meth)acryloyloxypropylmethyldimethoxysilane and 3-(meth)acryloyloxypropyltrimethoxysilane. Among them, 3-(meth)acryloyloxypropylmethyldimethoxysilane and 3-(meth)acryloyloxypropyltrimethoxysilane are preferable in view of reactivity with other vinyl-based monomers. It is preferable to use these alkoxysilyl-containing monomers together with the above-mentioned monomers, from the standpoint of control of the physical properties of an adhesive hardened layer. Further, it is preferable that the content of an alkoxysilyl group-containing monomer is 0.01 to 10 wt% in 100 parts by weight of monomer components for synthesizing a vinyl-based polymer (c) . If the content is less than 0.01 wt%, there is a tendency that sufficient control of physical properties is difficult. If the content is over 10 wt%, there is a tendency that an adhesive hardened layer becomes harder.

The vinyl-based polymer (c) can be obtained by polymerizing the above-mentioned monomers by a known method such as radical polymerization, anion polymerization and cation polymerization. This polymerization may be conducted in the presence of a solvent such as xylene, toluene, acetone, methyl ethyl ketone, ethyl acetate and butyl acetate. These solvents may be removed by a method such as distillation under reduced pressure after polymerization, if necessary. Further, the polymer (c) may be mixed with,for example,an alkoxysilyl group-containing polymer (a) or epoxy resin (d). However, a solvent removal process is so complicated. Therefore, a method of polymerizing monomer components for the vinyl-based polymer (c) in the presence of the above-mentioned alkoxysilyl group-containing polymer (a) is recommended, becase a mixture of both compounds is obtained easily.

As this polymerization method, a radical polymerization method conducted particularly in the presence of : an azo-based polymerization initiator such as 2,2'-azobis(2-isobutyronitrile), 2,2'-azobis(2-methylbutyronitrile), 2,2'-azobis(2,4-dimethylvaleronitrile), 2,2'-azobis(2-methyl-4-trimethoxysilylpentonitrile), 2,2'-azobis(2-methyl-4-methyldimethoxysilylpentonitrile), trade name: "VA-046B" , "VA-057" , "VA-061" , "VA-085" , "VA-086" , "VA-096" , "V-601" , V-65" and "VAm-110" manufactured by Wako Pure Chemical Industries Ltd. ;or peroxide-based polymerization initiator such as benzoyl peroxide, tert-alkyl peroxy ester, acetyl peroxide and diisopropyl peroxy carbonate is suitable, from the standpoint of controlling the molecular weight of a vinyl-based polymer.

In this case, polymerization may be conducted in the presence of a chain transfer agent such as laurylmercaptane, γ - mercaptopropyltrimethoxysilane, γ-mercaptopropylmethyldimethoxysilane, thio-β-naphthol, thiophenol, n-butylmercaptane, ethylthioglycolate, isopropylmercaptane, t-butylmercaptane and γ-trimethoxysilylpropyl disulfide.

A modified silicone polymer which is a mixture of an alkoxysilyl group-containing polymer (a) and a vinyl-based polymer (c) is commercially available under the trade name of "ES-GX3406a" (manufactured by Asahi Glass Co. , Ltd. ) , ''Silyl MA440" , "Silyl MA447" and "Silyl MA430" (all manufactured by Kaneka Corp.), and these can be utilized.

The adhesive of the present invention includes an epoxy resin (d) and an epoxy hardening agent (e) . Since an epoxy resin (d) is three-dimensionally hardened by an epoxy hardening agent (e), it plays a role of enhancing the heat resistance of an adhesive layer and adhesive strength to a member.

Example of the epoxy resin (e) include, but not limited to, known bisphenol type epoxy resins; biphenyl type epoxy resins; alicyclic epoxy resins; polyfunctional glycidylamine resins such as tetraglycidylaminodiphenylmethane; polyfunctional glycidyl ether resins such as tetraphenyl glycidyl ether ethane; phenyl novolak type epoxy resins and cresol novolak type epoxy resins. Epoxy resins of various grades are marketed, and these can be utilized. From the standpoint of workability, preferable is a bisphenol A type liquid resin having a molecular weight of about 300 to 500 and liquid at normal temperature.

The epoxy hardening agent (e) is not particularly restricted providing it is ahardening agent generally used, and, for example, amines such as triethylenetetramine, diethylenetriamine, metaxylenediamine, metaphenylenediamine, diaminodiphenylmethane, isophoronediamine and 2,4,6-tris(dimethylaminomethyl)phenol; tertiary amine salts; polyamide resins; imidazoles: carboxylic anhydrides such as phthalic anhydride, can be used. Particularly, it is preferable to use an aliphatic amine-based hardening agent showing fast hardening reaction, because the automobile adhesive of the present invention is usually used at normal temperature. It may also be permissible to use a latent type hardening agent such as ketimine in which an active amine is blocked and activated by moisture in air. It may be advantageous to use an epoxy hardening agent (e) in an amount of 0.1 to 300 parts by weight based on 100 parts by weight of an epoxy resin (d).

The adhesive of the present invention contains an inorganic filler (f). Inorganic filler controls the viscosity and structural viscosity index of an adhesive before hardening, prevents disadvantages such as dropping and the like, and quickly imparts temporal tacking. Further, it works as an extender, and simultaneously, performs an action of enhancing the strength and heat resistance of an adhesion hardened layer as a reinforcing agent. Preferable examples of the inorganic filler (f) include, but not limited to, powdery materials such as calcium carbonate, silica, titanium dioxide, talc and mica. As the calcium carbonate, colloidal calcium carbonate and heavy calcium carbonate are exemplified, and any of them can be used.

The adhesive of the present invention should have a viscosity of 100 to 700 Pa • s at 23°C directly after mixing components (a) to (f) for 30 seconds. The reason for "directly after mixing" is that hardening initiates quickly if the adhesive contacts moisture in the air or moisture contained in an inorganic filler. When the viscosity is less than 100 Pa • s, disadvantages such as dropping and extrusion occur. And it takes a longer time for manifestation of temporal tacking. A viscosity over 700 Pa • s is not preferable since the viscosity is too high and mixing workability and application workability deteriorate. The viscosity is measured in conformity to JIS K 6833 under an atmosphere of 23°C and 40 to 60% RH (relative humidity) using a rotational viscometer with a No. 7 rotor, at a revolution of 10 rpm.

Further, the adhesive of the present invention should have a structural viscosity index directly after mixing all of components (a) to (f) of 2.0 to 4.0. Here, the structural viscosity index (X/Y) is a value obtained by dividing viscosity value X at a revolution of 2 rpm by a viscosity value Y at a revolution of 10 rpm. Conditions for measurement of viscosity are the same as described above excepting the revolution. A structural viscosity index of less than 2.0 is not preferable since temporal tacking is not manifested, and an adhesive layer flows when it is raisedvertically. A structural viscosity index of over 4. 0 is not preferable since then application workability is inferior.

The adhesive of the present invention essentially contains the above-described component (a) to (f), and for satisfying the above-mentioned requirements for viscosity and structural viscosity index, it is preferable to contain 1 to 200 parts by weight of a vinyl-based polymer (c) , 30 to 70 parts by weight of an epoxy resin ( d) and 10 to 300 parts by weight of an inorganic filler (f) based on 100 parts by weight of an alkoxysilyl group-containing polymer(a). When the amount of an vinyl-based polymer (c) is too small, an action of promoting a hydrolysis polycondensation reaction of an alkoxysilyl group is not manifested, and when it is too large, there is a possibility of disturbance of an excellent vibration resistance of an alkoxysilyl group-containing polymer (a). When the amount of an epoxy resin (d) is too small, the final adhesion strength, heat resistance, chemical resistance and the like of an adhesion hardened layer are deficient in some cases, and when it is too large , there is a possibility of decrease in vibration resistance. When the amount of an inorganic filler (f) is too small, there is a possibility that the viscosity and structural viscosity index of an adhesive before hardening fall below the intended values, and disadvantages such as dropping occur, while when it is too large, workability deteriorates.

In the adhesive of the present invention, moisture initiates a hardening reaction of an alkoxysilyl group-containing polymer (a), it is preferable to mix components immediately before use. It is preferable to avoid contact with moisture in the air to obtain stable hardening speed irrespective of outer environments during mixing components. For example, it is recommended to mix components while blocking air by a static mixer and the like.

In view of shortening of mixing time and pot life, it is advantageous to prepare a two liquid type adhesive and mix two liquids immediately before use. If a two liquid type adhesive is divided into an agent A and an agent B, pot life is elongated by compounding, for example, an alkoxysilyl group-containing polymer (a) into an agent A, a hardening catalyst for alkoxysilyl group-containing polymer (b) into an agent B, and an epoxy resin (d) into an agent B and an epoxy hardening agent (e) into an agent A, respectively separately. When a commercially available product prepared by mixing a vinyl-based polymer (c) into an alkoxysilyl group-containing polymer (a) is used, the vinyl-based polymer (c) is contained in an agent A. However, it may also be permissible that a vinyl-based polymer (c) is separately synthesized and mixed into an agent B. The inorganic filler (f) may be mixed into either an agent A or an agent B, or may also be mixed in both of agents A and B . It is preferable to mix an inorganic filler (f) into both of agents A and B to impart approximately the same level of viscosity to the agents A and B since it is easy to mix both of them. In preparing agents A and B, known mixing means such as a planetary mixer can be adopted.

On the other hand, when components (a) to (f) are preserved in the form of one liquid type adhesive, it may be advantageous that the adhesive contains a latent type hardening agent as the epoxyhardeningagent (e), componentsaremixedwithoutmoisture, and then, the mixture is preserved in a sealed vessel which is capable of blocking moisture. The latent type hardening agent includes, for example, compounds produced by dehydration-condensation of an amine compound having two or more primary amines in the molecule with ketones or aldehydes. The former is called ketimine and the latter is called enamine. The ketimine and enamine are easily decomposed by moisture into the original amine compound and ketone or aldehyde, imparting an action and effect as the epoxy hardening agent. Of such latent type hardening agents, dehydration-condensates of norbornanediamine and diethylketone or methyl isobutyl ketone are preferable, in view of control of physical properties and durability.

Into the adhesive of the present invention, known additives and reinforcing agents such as ultraviolet absorbers, ultraviolet stabilizers, adhesion imparting agents, pigments, fibrous reinforcing agents and hollow fine particles can also be added, if necessary.

As the method of using the adhesive of the present invention, it may be advantageous only by applying a suitable amount of adhesive to a base material and pressing a member on this. As the application method, any of known methods can be adopted. The application amount can be appropriately changed depending on the weight, form and the like of a member to be adhered to glass. For example, in the case of a bracket for mounting an inner mirror (weight is 39 g, when made of a metal), it is preferable to apply an adhesive at an amount of 0. 02 to 0.1 g/cm². According to the present invention, when a bracket is adhered, a temporal tacking property ( quick hardening property) such that a blacket is displace from the original position within 1 mm or less in case that a glass is raised vertically for 1 to 5 minutes at a room temperature. Thereafter, an adhesion hardening reaction of an epoxy resin is completed in about 10 to 20 hours, and an adhesion hardened layer is formed to have very strong adhesive strength and excellent in various properties such as vibration resistance, durability, weather resistance, impact resistance, water resistance and heat resistance. Since the adhesive of the present invention can satisfy a temporal tacking property and strong adhesion simultaneously, a primer treatment and post treatments are not particularly necessary, however, post treatments such as heating and humidification may be appropriately conducted.

The adhesive of the present invention can be suitably used for adhesion of members such as moles, protectors, positioning standard pins, hinges and brackets for mounting a sensor to an automobile glass, adhesion of inners with outers such as a direct grading for imposing a glass to a car body, bonnet, door and back trim, adhesion of a reinforcing agent of a bonnet, door and roof, in addition to fitting of a bracket made of metal or resin for mounting an inner mirror to an automobile glass.

The following examples will illustrate the present invention further in detail, but do not limit the present Invention, and varied embodiments within the range not deteriorating the significance of the present invention are all included in the invention.

In the following descriptions, "parts" means "by weight" and ''%'' means "wt%".

### (Example 1)

100 parts of an adhesive ( trade name "Bond MOS10A agent," manufactured by Konishi Co., Ltd.) containing an amine-based epoxy hardening agent in an amount of 5% in a modified silicone polymer (trade name "Silyl SAT200" , manufactured by Keneka Corp.) having a monomethyldimethoxysilyl group in the end structure; 30 parts of a modified silicone polymer (trade name "ES-GX3406a" , manufactured by Asahi Glass Co., Ltd.) having a trimethoxysilyl group in the end containing about 23% of a vinyl-based polymer (acrylonitrile/styrene-based copolymer); 65 parts of colloidal calcium carbonate (trade name "Hakuenka CC-R" , manufactured by Shiraishi Kogyo K.K. ) ; and 30 parts of heavy calcium carbonate (trade name "NS-400'' , manufactured by Nitto Hunka Kogyo K.K. ) were mixed in a planetary mixer, to give an agent A of a two liquid type adhesive.

On the other hand, 100 parts of an adhesive (trade name: "Bond MOS10B agent" , manufactured by Konishi Co., Ltd.) containing an organotin compound-based catalyst for alkoxysilyl group-containing polymer in an amount of 4% in a bisphenol type epoxy resin; 50 parts of colloidal calcium carbonate (trade name "Hakuenka CC-R" , manufactured by Shiraishi Kogyo R.K.) and 25 parts of heavy calcium carbonate (trade name "NS-400" , manufactured by Nitto Hunka Kogyo K.K.) were mixed in a planetary mixer, to give an agent B.

100 parts of the above-mentioned agent A and 50 parts of the above-mentioned agent B were mixed, to obtain an adhesive of the present invention. Viscosity, structural viscosity index, displacement resistance and tack free property were measured according to the following conditions and shown in Table 1.

### [Viscosity]

Viscosity is a value obtained by sufficiently mixing the agent A and the agent B obtained in the above-mentioned example at a mixing ratio shown in Table 1 for 30 seconds manually using a spatula, and measured in conformity to JIS K 6833 under an atmosphere of 23°C and 40 to 60% RH using a rotational viscometer (BS type, manufactured by TOKIMEC) with a No. 7 rotor, at a revolution of 10 rpm.

### [Structural viscosity index]

Structural viscosity index is a value obtained by sufficiently mixing the agent A and the agent B obtained in the above-mentioned example at a mixing ratio shown in Table 1 for 30 seconds, and measuring a viscosity value X at a revolution of 2 rpm and a viscosity value Y at a revolution of 10 rpm in conformity to JIS K 6833 under an atmosphere of 23°C and 40 to 60% RH using a rotational viscometer (BS type, manufactured by TOKIMEC) with a No. 7 rotor, and dividing the viscosity value X by the viscosity value Y (X/Y).

### [Displacement resistance]

The agent A and the agent B obtained in the above-mentioned example were sufficiently mixed at a mixing ratio shown in Table 1 for 30 seconds manually using a spatula under an atmosphere of 23°C and 50% relative humidity to obtain an adhesive. 0.3 g of the adhesive was applied on 39 g of an inner mirror mounting bracket (application area: 8.5 cm²) , and the bracket was pressed against the an automobile float plate glass placed approximately horizontally with hands, to attaché the galss, and the glass with the bracket was raised vertically one minute after the bracket is pressed against the glass and the displacement distance (mm) of the bracket was measured three minutes after the glass is raised vertically.

### [Tack free property]

The agent A and the agent B obtained in the above-mentioned example were sufficiently mixed at a mixing ratio shown in Table 1 for 30 seconds manually using a spatula under an atmosphere of 23°C and 50% relative humidity, and filled in a polyethylene vessel having a diameter of 50 mm and a depth of 10 mm and its surface was flattened smoothly. A time (minute) until adhesion of an adhesive does not come to adhere to a finger when a finger touches the surface of the adhesive in conformity to JIS A 1439.

### (Example 2 and Comparative Examples 1 to 2)

The compounding of the agent A was changed as shown in Table 1. The agent A was mixed with the agent B, and evaluations of the adhesive were conducted in the same manners as in Example 1. The Silyl MA440 (manufactured by Kaneka Corp.) used in Example 2 is a trade name of a modified silicone polymer containing a vinyl-based polymer and having a monomethyldimethoxysilyl group in the end.

The evaluation results in Examples 1 and 2 and Comparative Examples 1 and 2 are shown in Table 1.

**Table 1**

| | | Example 1 | Example 2 | Comparative Example 1 | Comparative Example 2 |
|---|---|---|---|---|---|
| Agent A | MOS10A | 100 | 100 | 100 | 100 |
| | ES-GX3406a | 30 | - | 30 | - |
| | Silyl MA440 | - | 30 | - | - |
| | Hakuenka CC-R | 65 | 65 | 30 | 65 |
| | NS400 | 30 | 30 | 65 | 30 |
| Agent B | MOS10B | 100 | 100 | 100 | 100 |
| | Hakuenka CC-R | 50 | 50 | 50 | 50 |
| | NS400 | 25 | 25 | 25 | 25 |
| Weight mixing ratio (agent A/agent B) | | 2/1 | 2/1 | 2/1 | 2/1 |
| Viscosity (23°C, Pa ^{.} s) | | 256 | 428 | 157 | 390 |
| Structural viscosity index | | 2.95 | 2.72 | 1.88 | 3.13 |
| Displacement resistance (mm) | | 0 | 1 | 10< | 8 |
| Tack free (23°C, minute) | | 2 | 3 | 2 | 8 |

Example 1 of the present invention shows most preferable displacement resistance as a result of mixing of a modified silicone polymer having a methyldimethoxysilyl group in the end and a polymer (ES-GX3406a) containing a vinyl-based polymer and having a trimethoxysilyl group in the end, and using the mixture as the alkoxysilyl group-containing polymer and vinyl-based polymer.

In Example 2, a modified silicone polymer having a methyldimethoxysilyl group in the end and a polymer (Silyl MA440) containing a vinyl-based polymer and having a methyldimethoxysilyl group in the end were used in admixture. As the alkoxysilyl group-containing polymer,only a methyldimethoxysilyl group-containing polymer was contained, however, excellent displacement resistance was shown since viscosity and structural viscosity index had been controlled.

In Comparative Example 1, because a polymer (ES-GX3406a) containing a vinyl-based polymer and having a trimethoxysilyl group in the end structure was used, the tack free property was excellent. However, remarkable displacement occurred. Because, the structural viscosity index did not reach the range defined in the present invention.

In Comparative Example 2, a vinyl-based polymer was not contained , the tack free property was inferior, and the primary hardening reaction was slow. Therefore, the displacement resistance was also poor.

### (Example 3)

(1) 2000 g of a polyoxypropylenediol having a number-average molecular weight of 4000 (TakelackP-28, trade name : manufactured by Takeda Chemical Industries, Ltd.) and 174.2 g of Sumidule T-80 (trade name: manufactured by Sumitomo Beyer Urethane K.K. , tolylene diisocyanate) were charged into a reaction vessel, and reacted at 90°C for 3 hours while stirring under a nitrogen atmosphere, to obtain a urethane prepolymer (PUR-1).
(2) 179.3 g of KBM903 (trade name: manufactured by Shin-Etsu Chemical Co., Ltd., γ-aminopropyltrimethoxysilane) and 86.1 g of methyl acrylate were mixed and reacted at 23°C for 7 days to obtain a reaction product (AS-1). Here, methyl acrylate was used to obtain a reaction product having one secondary amine in the molecule by Michael addition.
(3) 163.3 g of KBM902 (trade name: manufactured by Shin-Etsu Chemical Co., Ltd., γ-aminopropylmethyldimethoxysilane) and 184.3 g of 2-ethylhexyl acrylate were mixed and reacted at 23°C for 7 days to obtain a reaction product (AS-2). Here, 2-ethylhexyl acrylate was used to obtain a reaction product having one secondary amine in the molecule by Michael addition.
(4) 1000 g of the urethane prepolymer (PUR-1), 61 g of the reaction product (AS-1) and 80 g of the reaction product (AS-2) were charged in a reaction vessel, and reacted at 90°C for 1 hour while stirring under a nitrogen atmosphere, to obtain a liquid urethane-based resin (I) having a monomethyldimethoxysilyl group and a trimethoxysilyl group at the end structure.
(5) 500 g of a urethane-based resin was charged in a reaction vessel and heated at 100°C under a nitrogen atmosphere, and a mixed solution of 250g of methyl methacrylate, 250g of n-lauryl methacrylate, 50 g of KBM503 (trade name: manufactured by Shin-Etsu Chemical Co., Ltd., γ-methacryloxypropyltrimethoxysilane), 5 g of KBM803 (trade name: manufactured by Shin-Etsu Chemical Co., Ltd., γ-mercaptopropyltrimethoxysilane), 5 g of laurylmercaptane as a chain transfer agent and 5 g of azobisisobutyronitrile as a polymerization initiator was dropped over 5 hours, further, they were reacted at 100°C for 2 hours, to obtain a mixture (I-1) of a vinyl-based polymer containing a trimethoxysilyl group and a urethane-based resin having a monomethyldimethoxysilyl group and a trimethoxysilyl group in the end.
(6) 100 parts of the above-mentioned mixture (I-1), 5 parts of an amine-based epoxy hardening agent ( trade name: "Ankamine K-54" ; manufactured by Air Products Japan), 65 parts of colloidal calcium carbonate (trade name "Hakuenka CC-R" ; manufactured by Shiraishi Kogyo K.K.) and 30 parts of heavy calcium carbonate (trade name "NS-400" ; manufactured by Nitto Hunka Kogyo K.K.) were mixed in a planetary mixed to obtain an agent A of a two liquid type adhesive. The obtained agent A was mixed with the agent B of Example 1, and evaluations of an adhesive were conducted in the same manners as in Example 1. The viscosity was 328 Pa^{.} s, the structural viscosity index was 2.86, the displacement resistance was 0 mm and the tack free was 2 minutes.

### (Example 4)

(1) 174.2 g of Sumidule T-80 was charged in a reaction vessel, and a mixture of 132.7 g of the reaction product (AS-1) and 173.8 9 of the reaction product ( AS-2 ) was dropped over 3 hours , further, they were reacted at room temperature for 1 hour, to obtain a reaction product (IS-1).
(2) 2000 g of Takelack P-28 and 480 g of the reaction product (IS-1) were charged in a reaction vessel, and they were reacted at 90°C for 3 hours while stirring under a nitrogen atmosphere, to obtain a liquid urethane-based resin (II) having a monomethyldimethoxysilyl group and a trimethoxysilyl group in the end.
(3) Evaluations of an adhesive were conducted in the same manners as in Example 3 except that the urethane-based resin (II) was used instead of the urethane-based resin (I). The viscosity was 266 Pa · s, the structural viscosity index was 3.02 , the displacement resistance was 0 mm and the tack free was 2 minutes.

The evaluation results in Examples 3 and 4 are shown below.

**Table 2**

| | | Example 3 | Example 4 |
|---|---|---|---|
| Agent A Agent A | Mixture | (I-I)100 | (II-I)100 |
| | Ankamine K-54 | 5 | 5 |
| | Hakuenka CC-R | 65 | 65 |
| | NS400, | 30 | 30 |
| Agent B | MOS10B | 100 | 100 |
| | Hakuenka CC-R | 50 | 50 |
| | NS400 | 25 | 25 |
| Weight mixing ratio (agent A/agent B) | | 2/1 | 2/1 |
| Viscosity (23°C, Pa · s) | | 328 | 266 |
| Structural viscosity index | | 2.86 | 3.02 |
| Displacement resistance (mm) | | 0 | 0 |
| Tack free (23°C, minute) | | 2 | 2 |

In Examples 3 and 4, most excellent displacement resistance was shown as a result of use of a mixture of an alkoxysilyl group-containing urethane resin having a methyldimethoxysilyl group and a trimethoxysilyl group in the end structure and an alkoxysilyl group-containing vinyl-based polymer.

It should be understood that the foregoing relates to only a preferred embodiment of the invention, and it is intended to cover all changes and modifications of the examples of the invention herein chosen for the purposes of the disclosure, which do not constitute departures from the sprit and scope of the invention.

### Industrial Applicability

The adhesive of the present invention has a fast hardening property and does not cause disadvantages such as dropping, displacement and the like even if an adhesive layer is raised vertically for a level of 1 to 5 minutes. The hardened adhesive layer is excellent in vibration resistance, durability, weather resistance, impact resistance, water resistance, heat resistance and the like and adheres strongly to a member finally. Consequently, it is useful as an automobile adhesive, and particularly, extremely useful as an adhesive in fitting an inner mirror mounting bracket to a front glass.

## Claims

1. An automobile adhesive comprising
(a) an alkoxysilyl group-containing polymer,
(b) a hardening catalyst for said alkoxysilyl group-containing polymer,
(c) a vinyl-based polymer,
(d) an epoxy resin,
(e) an epoxy hardening agent, and
(f) an inorganic filler,
wherein the adhesive has a viscosity at 23°C of 100 to 700 Pa · s and a structural viscosity index of 2.0 to 4.0 immediately after mixing all of said (a) to (f).

2. The automobile adhesive according to Claim 1, wherein the alkoxysilyl group-containing polymer (a) has its main chain alkoxysilyl group-containing polymer (a) has its main chain substantially of polyoxyalkylene structure, and the alkoxysilyl group contains one or more selected from the group consisting of a dialkylmonoalkoxysilyl group, monoalkyldialkoxysilyl group and trialkoxysilyl group.

3. The automobile adhesive according to Claim 2 , wherein the alkoxysilyl group-containing polymer (a) contains a monomethyldimethoxysilyl group and a trimethoxysilyl group.
